# EUROPÄISCHE PATENTSCHRIFT

(11) **EP 3 145 770 B1**
(45) Veröffentlichungstag und Bekanntmachung des Hinweises auf die Patenterteilung: **15.06.2022**
(21) Anmeldenummer: 15723528.4
(22) Anmeldetag: 20.05.2015
(51) Int. Cl.: B60T 13/68, B60T 13/04, B60T 13/58

(54) **ELEKTRISCHE PARKBREMSE**
ELECTRIC PARKING BRAKE
FREIN DE STATIONNEMENT ÉLECTRIQUE

(30) Priorität: 22.05.2014 DE 102014107218
(43) Veröffentlichungstag der Anmeldung: 29.03.2017
(60) Teilanmeldung: 21189016.5
(73) Patentinhaber: KNORR-BREMSE Systeme für Nutzfahrzeuge GmbH, 80809 München (DE)
(72) Erfinder: LEINUNG, Andreas, 81245 München (DE); SCHNITTGER, Karsten, 80935 München (DE)
(74) Vertreter: Wiedemann, Markus
(86) Internationale Anmeldenummer: PCT/EP2015/061186
(87) Internationale Veröffentlichungsnummer: WO 2015/177249

(56) Entgegenhaltungen:
- EP-A2- 2 572 950
- WO-A1-2007/065498
- WO-A2-2008/101592
- WO-A2-2009/098003

## Beschreibung

Die Erfindung betrifft eine elektrische Parkbremse, insbesondere für ein Nutzfahrzeug, gemäß dem Oberbegriff von Anspruch 1.

Elektrische Parkbremsen sind beispielsweise aus DE 10 2008 048 207 B4 bekannt, wobei ein Kompressor die Parkbremse mit Druckluft versorgt und wobei eine Ventilanordnung mit elektrisch ansteuerbaren Ventilen und einem Relaisventil die Druckluftversorgung für mit Druckluftausgängen verbundene Verbraucherkreise, wie beispielsweise ein Anhängersteuerventil oder eine Federspeicherfeststellbremse, regelt. Dabei weist die Parkbremse ein elektrisch steuerbares Ventil auf, welches neben Drücken, die einer permanenten Offenstellung bzw. Schließstellung des Ventils entsprechen, die Verbraucherkreise auch mit einem dazwischen liegenden graduellen Luftdruck versorgen kann, wobei hierzu das steuerbare Ventil getaktet betrieben wird. Die Parkbremse weist an dem Druckluftausgang zur Federspeicherfeststellbremse ein Relaisventil auf, dem eingangsseitig Druckluft aus der Druckluftquelle zugeführt wird und dessen Ausgangsdruck durch den an einem Steuereingang anliegenden graduellen Druck des Sperrventils gesteuert wird.

DE 10 2008 007 877 B3 zeigt eine Parkbremseinrichtung mit einem ausgangsseitig angeordneten Federspeicherbremszylinder sowie ausgangsseitig angeordneten Anhängersteuerventilen. Der Federspeicherbremszylinder wird von einem Relaisventil angesteuert, wobei das Relaisventil durch ein Sicherheitsventil gesteuert wird, das eine pneumatische Rückkopplung aufweist, indem ein Select-Low-Ventil den kleineren von zwei Drücken an einen Steuereingang des Sicherheitsventil durchschaltet, der an einem Ausgang oder an einem Eingang des Sicherheitsventil anliegt. Das Sicherheitsventil wird eingangsseitig über zwei Magnetventile mit geregelter Druckluft versorgt und ist von seiner Bauart für sich allein genommen ein monostabiles Ventil, wobei eine Bistabilität des Sicherheitsventils durch die pneumatische Rückkopplung erzielt wird.

Es versteht sich im Folgenden, dass die Betrachtung der Parkbremse stets von der Druckluftzufuhr hin zu den Druckluftausgängen erfolgt. Ist die Rede von nachfolgenden Komponenten, so sind stets die in den Leitungen bzw. in der Parkbremse schaltungstechnisch näher an den Druckluftausgängen angeordneten Komponenten gemeint. Ebenso verhält es sich mit Worten "eingangsseitig" und "ausgangsseitig", wobei mit "eingangsseitig" der Druckluftzufuhr zugewandte Anschluss und mit "ausgangsseitig" der den Druckluftausgängen zugewandte Anschluss einer Komponente gemeint ist. "Steuerseitig" beschreibt die Zugehörigkeit zu einem eventuell vorhandenen Steueranschluss einer Komponente. Ferner versteht sich, dass der Begriff "graduell" im Zusammenhang mit einem Druckniveau als zwischen einem maximalen Vorratsdruck und einem minimalen Umgebungsdruck liegend zu sehen ist. Als Ventilanordnung ist vorliegend eine sämtliche Ventile sowie sämtliche zwischen den Ventilen liegende Leitungselemente umfassende Anordnung zu verstehen.

Derzeit verwendete Parkbremsen mit bistabilen Ventilen erlauben ein gestuftes, d.h. graduelles Bremsen lediglich oberhalb eines bestimmten an den Druckluftausgängen anliegenden Mindestdrucks, da unterhalb des bei ca. 1 bar über Umgebungsdruck liegenden Mindestdrucks automatisch die Feststellbremse eingelegt wird. Dies ist auf das Schaltverhalten eines eingesetzten bistabilen Ventils zurück zu führen. Bistabile Ventile sperren in einer Parkstellung die Druckluftversorgung zu der elektronischen Parkbremse ab, während die elektronische Parkbremse an eine Entlüftungsleitung angeschlossen ist. Dadurch entlüftet die Parkbremse und die Federspeicher können eine Bremskraft aufbringen. In einer Fahrstellung ist die Druckluftversorgung zur elektrischen Parkbremse angeschlossen, so dass die Entlüftung der elektronischen Parkbremse geschlossen ist und die elektronische Parkbremse löst oder gelöst ist.

Eine gattungsgemäße Parkbremse ist aus WO 2007/065498 A1 bekannt. Weitere Parkbremsen sind in EP 2 572 950 A2 und in WO 2008/101592 A2 offenbart.

Es ist die Aufgabe der Erfindung, eine elektrische Parkbremse anzugeben, die eine möglichst geringe Anzahl schaltbarer Ventile aufweist und die Druckluftausgänge sicher mit Druckluft versorgt.

Diese Aufgabe wird mit einer elektrischen Parkbremse mit den Merkmalen von Anspruch 1 gelöst.

Wie bei der gattungsgemäßen elektrischen Parkbremse ist das bistabile Ventil eingangsseitig unabhängig von dem Schaltzustand der Ventilanordnung von der Druckluftzufuhr mit Druckluft versorgt ist, die einen von dem Kompressor und/oder dem Druckluftvorrat zur Verfügung gestellten Druck aufweist. Damit kann sichergestellt werden, dass die elektrische Parkbremse stets dafür sorgen kann, dass die Anhängerbremse eine Bremswirkung entfaltet. Bestünde andererseits die Möglichkeit, dass der Eingangsdruck des bistabilen Ventils auf Umgebungsdruck absinkt, so könnte dies dazu führen, dass der Anhänger während eines Bremsvorgangs ungebremst bleibt und folglich auf das Zugfahrzeug aufläuft. Das Gespann kann dann im schlimmsten Fall einknicken. Diese Gefahr wird gänzlich ausgeräumt. Insbesondere lässt sich so vorteilhaft eine Parkbremse realisieren, deren dem bistabilen Ventil nachgeschalteten Verbraucher auch bei einem Stromausfall sicher mit Vorratsdruck versorgt werden, wenn das bistabile Ventil in seine Durchlassposition geschaltet ist. So kann durch das bistabile Ventil vorteilhaft alleine ein Zustand der Druckluftausgänge zumindest während der Fahrt kontrolliert werden, ohne dass vorgeschaltete Komponenten, insbesondere Ventile, Einfluss nehmen können. Mit der erfindungsgemäßen elektronischen Parkbremse können ferner die Ansteuerung einer Feststellbremse des Nutzfahrzeugs und eine als Trailertestfunktion bekannte Prüffunktion durchgeführt werden. Dabei kann die Bremswirkung der Feststellbremse und der Betriebsbremse des Anhängers vorteilhaft graduell anpassbar sein, wobei die Prüffunktion ausführbar ist, ohne dass eine stabile Parkposition verlassen werden muss. Bei der Trailertestfunktion wird von dem Fahrer vor dem Stilllegen des Nutzfahrzeugs geprüft, ob ein Gespann aus Nutzfahrzeug und Anhänger auch an einer Steigung abgestellt werden kann, selbst wenn nur die Parkbremse des Nutzfahrzeugs und nicht eine Bremse des Anhängers aktiviert ist. Hierzu wird bei eingelegter Parkbremse des Nutzfahrzeugs die Bremse des Anhängers gelöst, indem die Steuerleitung eines Anhängersteuermoduls mit Druckluft versorgt wird. Setzt sich das Gespann nicht in Bewegung, so kann das Gespann an der Steigung stillgelegt werden.

Weiterhin geht die Erfindung davon aus, dass einer der zumindest zwei Druckluftausgänge einen Feststellbremsanschluss mit Druckluft versorgt, wobei diesem Druckluftausgang ein Relaisventil vorgeschaltet ist. Es kann vorgesehen sein, dass das Relaisventil durch die graduelle Druckluft des Ventilpaares gesteuert wird.

Erfindungsgemäß ist zumindest ein Drucksensor zur Druckmessung der Druckluft innerhalb der Ventilanordnung angeordnet. Dabei ist vorgesehen, dass der Drucksensor vor dem Steuereingang des Relaisventils angeordnet ist, so dass eine steuerseitig anliegende Druckluft an dem Relaisventil Rückschluss auf den Zustand des Relaisventils liefern kann.

Die erfindungsgemäße Parkbremse kann das Merkmal aufweisen, dass das bistabile Ventil unmittelbar mit der Druckluftzufuhr verbunden ist. Dabei bedeutet unmittelbar, dass keine aktiven Komponenten, insbesondere keine schaltbaren Ventile, in einer Druckluftleitung zwischen der Druckluftzufuhr und dem bistabilen Ventil angeordnet sind. Dadurch wird vorteilhaft erreicht, dass die Parkbremse nicht durch einen plötzlichen Stromausfall eine vor dem bistabilen Ventil angeordnete Komponente, beispielsweise ein Magnetventil, schaltet und so ein Zustand des Gesamtsystems unbeabsichtigt verändert wird.

Die Erfindung kann vorteilhaft derart weitergebildet sein, dass die Ventilanordnung genau drei elektrisch steuerbare Ventile umfasst. Dies ist eine sehr geringe Anzahl steuerbarer Ventile zur Druckluftversorgung von zwei oder drei mit jeweils unterschiedlichem Druck beaufschlagbaren Druckluftausgängen. Die Erfindung kann vorsehen, dass die drei elektrisch steuerbaren Ventile das bistabile Ventil umfassen. Es kann ferner beabsichtigt sein, dass die elektrisch steuerbaren Ventile Magnetventile sind. Es kann darüber hinaus der spezielle Fall gewählt sein, dass die elektrisch steuerbaren Ventile mindestens ein 3/2-Wegeventil umfassen. In einer vorteilhaften Weiterbildung ist das 3/2-Wegeventil an eine Entlüftungsleitung angeschlossen, wobei es in einer Entlüftungsstellung die nachfolgenden Komponenten auf Umgebungsdruck entlüftet. Es kann auch vorgesehen sein, dass die elektrisch steuerbaren Ventile ein 2/2-Wegeventil umfassen. Es kann vorgesehen sein, dass die elektrisch steuerbaren Ventile in eine ihrer Schaltpositionen vorgespannt sind. Dabei kann ergänzend oder alternativ vorgesehen sein, dass ein elektrisch steuerbares Ventil einen Motorantrieb zur Veränderung der Schaltposition aufweist. Die Erfindung kann insbesondere derart ausgebildet sein, dass das bistabile Ventil einen Motorantrieb aufweist.

Die Erfindung kann vorteilhaft derart ausgebildet sein, dass die Ventilanordnung ein pneumatisch steuerbares Ventil zur Invertierung eines Vorratsdruckes für ein Anhängersteuermodul umfasst. Eine Invertierung des Drucks bedeutet, dass anstelle eines Umgebungsdrucks ein reiner Vorratsdruck zur Verfügung gestellt wird und umgekehrt. Es kann auch vorgesehen sein, dass das pneumatisch steuerbare Ventil an eine Entlüftungsleitung angeschlossen ist. Der reine Vorratsdruck entspricht einem maximal durch die Druckluftzufuhr bereit gestellten Luftdruck. Vorteilhaft kann die Erfindung derart ausgebildet sein, dass das pneumatisch steuerbare Ventil von zumindest einem der elektrisch steuerbaren Ventile gesteuert ist. Es kann ferner vorgesehen sein, dass das pneumatisch steuerbare Ventil von dem bistabilen Ventil gesteuert ist. Darüber hinaus ist es möglich, dass dem pneumatisch steuerbaren Ventil ein Select-High-Ventil oder ein Select-Low-Ventil vorangeschaltet ist. Dadurch kann auf einfache und günstige Weise eine Verschaltung mit dem bistabilen Ventil erzielt werden. Es kann weiterhin vorgesehen sein, dass das pneumatisch steuerbare Ventil ein 3/2-Wegeventil ist, wobei das Ventil eine Durchlassschaltposition und eine Sperrposition einnehmen kann und wobei die Entlüftungsleitung in der Sperrposition die nachfolgenden Parkbremskomponenten entlüftet. Es kann vorgesehen sein, dass die an dem pneumatisch steuerbaren Ventil eingangsseitig anliegende Druckluft unmittelbar aus der Druckluftzufuhr stammt. Es kann ferner vorgesehen sein, dass das pneumatisch steuerbare Ventil die nachfolgenden Komponenten entlüftet, wenn die steuerseitig anliegende Druckluft höher als der Umgebungsdruck ist. Insbesondere kann vorgesehen sein, dass das pneumatisch steuerbare Ventil die nachfolgenden Komponenten entlüftet, wenn der steuerseitig von einem von zwei elektrisch steuerbaren Ventilen gelieferte Druck höher als der Umgebungsdruck ist.

Vorzugsweise ist vorgesehen, dass die Ventilanordnung ein elektrisch steuerbares Ventilpaar, das eine graduelle Druckluftversorgung der zumindest zwei Druckluftausgänge bereitstellt, aufweist. Damit kann vorteilhaft ein beliebiger Druck zur Steuerung des Anhängersteuermoduls und der Feststellbremszylinder bereitgestellt werden. Es kann vorgesehen sein, dass das Ventilpaar aus einem 3/2-Wegeventil und einem 2/2-Wegeventil besteht. Dabei kann insbesondere vorgesehen sein, dass das 3/2-Wegeventil dem 2/2-Wegeventil vorgeschaltet ist. Es kann ferner vorgesehen sein, dass das Ventilpaar aus zwei Magnetventilen gebildet ist. Dadurch können die Magnetventile vorteilhaft durch eine elektrische Steuereinrichtung gesteuert werden, so dass vorteilhaft ein gewünschter Druck an den Druckluftausgängen bereitgestellt werden kann. Die Erfindung kann derart weitergebildet sein, dass das Ventilpaar eine Entlüftungsleitung umfasst und eine Druckluftzufuhr und eine Entlüftung der Druckluftausgänge erlaubt.

Es kann darüber hinaus vorteilhaft vorgesehen sein, dass zumindest ein Drucksensor zur Druckmessung der Druckluft zwischen der Ventilanordnung und einem der Druckluftausgänge angeordnet ist. Dadurch kann vorteilhaft ein Drucksignal für eine elektrische Steuereinrichtung bereitgestellt sein, so dass ein auf Druckänderungen reagiert werden kann. Insbesondere kann das Drucksignal der Druckluftausgänge bei einer Steuerung der Feststellbremszylinder oder des Anhängersteuermoduls berücksichtigt werden.

Es kann aber auch vorgesehen sein, dass ein Drucksensor in einem Leitungsabschnitt unmittelbar hinter dem bistabilen Ventil oder unmittelbar hinter dem Ventilpaar angeordnet ist. Dadurch lässt sich auf einfache Weise der an den Druckluftausgängen anliegende Druck bestimmen. Es kann insbesondere vorgesehen sein, dass ein Drucksensor in einem Leitungsabschnitt zwischen der Ventilanordnung und der Druckluftzufuhr angeordnet ist.

In einer vorteilhaften Ausgestaltung der Erfindung ist vorgesehen, dass zumindest ein weiterer Sensor für einen anderen Messwert als den Druck innerhalb der Ventilanordnung oder zwischen der Ventilanordnung und einem der Druckluftausgänge angeordnet ist. Der weitere Messwert wird an die Steuereinrichtung gesendet. Dadurch kann vorteilhaft auf einfache Weise der gemessene Druckwert mit einem anderen Messwert plausibilisiert und validiert werden, ohne dass ein weiterer in der Regel teurer Drucksensor vorgesehen werden muss. Bei dem anderen Sensor kann es sich um einen Wegsensor handeln, der die Bistabilität überwacht. In der Variante einer motorischen Bistabilität könnte die Motorposition z.B. über Hall-Sensoren überwacht werden. Es ist auch möglich, mittels einer Stromüberwachung die Motorposition festzuhalten und insofern mit nur einem Drucksensor und der elektronischen Stromüberwachung auszukommen.

Die Erfindung kann vorteilhaft derart weitergebildet sein, dass das bistabile Ventil einen Motorantrieb, insbesondere einen selbsthemmenden Motorantrieb aufweist.

Dadurch kann vorteilhaft eine stabile Position des bistabilen Ventils erzielt werden, selbst wenn das bistabile Ventil unbestromt ist. Es kann vorgesehen sein, dass das bistabile Ventil einen in einem Ventilgehäuse beweglich gelagerten und von dem Motorantrieb gesteuerten Schlitten aufweist, in dem ein Ventilkörper beweglich angeordnet ist.

Alternativ kann vorgesehen sein, dass das bistabile Ventil pneumatisch ansteuerbar ist.

Es zeigen:
- Figur 1: eine Prüfkonfiguration einer Ausführungsform einer erfindungsgemäßen elektrischen Parkbremse;

- Figur 2: eine Parkkonfiguration einer Ausführungsform einer erfindungsgemäßen elektrischen Parkbremse;
- Figur 3: eine Fahrkonfiguration einer Ausführungsform einer erfindungsgemäßen elektrischen Parkbremse;
- Figur 4: eine Haltekonfiguration einer Ausführungsform einer erfindungsgemäßen elektrischen Parkbremse;
- Figur 5: eine Entlüftungskonfiguration einer Ausführungsform einer erfindungsgemäßen elektrischen Parkbremse;
- Figur 6: eine Belüftungskonfiguration einer Ausführungsform einer erfindungsgemäßen elektrischen Parkbremse;

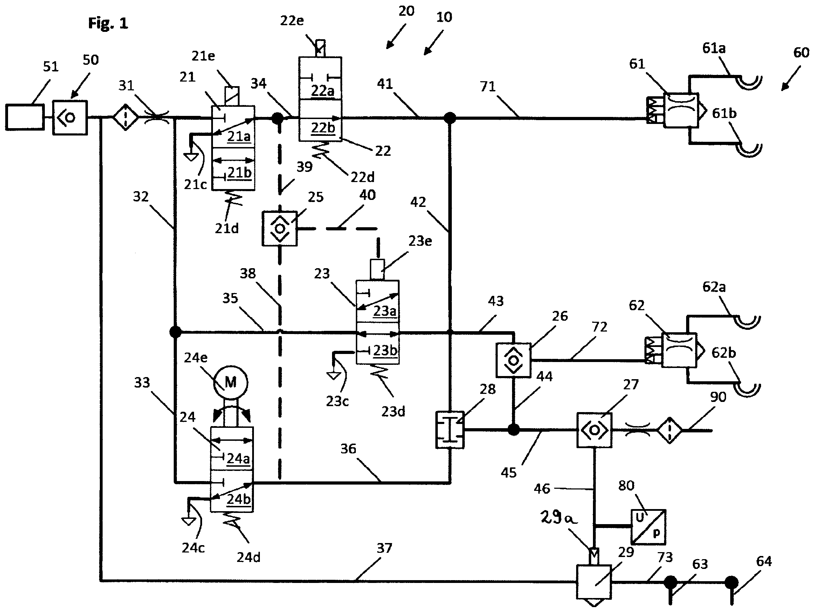

Die Figuren 1 bis 6 zeigen eine Ausführungsform einer erfindungsgemäßen elektrischen Parkbremse 10, umfassend eine Ventilanordnung 20, die eine Druckluftverteilung einer Druckluftzufuhr 50 an Druckluftverbraucherkreise 60 steuert. Die elektrische Parkbremse 10 befindet sich in Figur 1 in einer Prüfstellung, deren Funktion weiter unten noch näher erläutert wird. Die Ventilanordnung 20 umfasst ein als 3/2-Wegeventil ausgebildetes erstes Magnetventil 21, ein als 2/2-Wegeventil ausgebildetes zweites Magnetventil 22, ein bistabiles Ventil 24, ein pneumatisch steuerbares Ventil 23, sowie Select-High-Ventile 25, 26, 27, ein Select-Low-Ventil 28 und ein Relaisventil 29 mit einem pneumatischen Steueranschluss 29a. Magnetventile zeichnen sich durch elektrisch veränderbare Schaltpositionen aus. Bistabile Ventile sind in beiden Schaltpositionen sicher geschaltet, d.h. ein Verlust einer elektrischen Spannung zur Steuerung des bistabilen Ventils hat keine Auswirkungen auf den Schaltzustand des Ventils. Vorliegend ist das bistabile Ventil 24 durch ein optionales Federelement 24d vorgespannt, um den Motorantrieb 24e in eine Antriebsrichtung, d.h. bei einem Schaltzustandswechsel, zu unterstützen. Die Verbraucherkreise 60 sind ein an einen ersten Druckausgang 71 angeschlossenes erstes Anhängersteuermodul 61, ein an einen zweiten Druckausgang 72 angeschlossenes zweites Anhängersteuermodul 62 sowie an einen dritten Druckausgang 73 angeschlossene erste und zweite Federspeicherbremszylinder 63, 64. Die beiden Anhängerbremsmodule 61, 62 weisen jeweils einen Kupplungskopf 61a, 62a für einen Vorratsspeicher und einen Kupplungskopf 61b, 62b für eine Anhängerbremse auf. Das Drucksignal für die Anhängerbremse wird von den Anhängersteuermodulen invertiert. Wird der entsprechende Eingang der Anhängersteuermodule 61, 62 über die Druckluftausgänge 71, 72 mit Druck beaufschlagt, so sind die Kupplungsköpfe 61b, 62b drucklos. Im drucklosen Fall der Druckluftausgänge 71, 72 stehen die Kupplungsköpfe 61b, 62b unter Druck, so dass der Anhänger gebremst wird. Die dargestellte Parkbremse hat zwei Druckluftausgänge 71, 72 für Anhängersteuermodule 61, 62, um diese wahlweise zu verwenden. Während das Anhängersteuermodul 61 dazu vorgesehen ist, das stillgelegte Fahrzeug mit ungebremstem Anhänger zu parken, stellt das Anhängersteuermodul 62 die Möglichkeit zur Verfügung, das Fahrzeug mit gebremstem Anhänger stillzulegen. Die Druckluftzufuhr 50 erfolgt mittels eines Kompressors 51, welcher die Parkbremse mit komprimierter Druckluft, d.h. mit Luft mit einem über dem Umgebungsdruck liegenden Druck, versorgt.

An die Druckluftzufuhr 50 sind das erste Ventil 21, das pneumatisch steuerbare Ventil 23 sowie das bistabile Ventil 24 unmittelbar und ungeregelt angeschlossen. Ferner erfolgt eine unmittelbare und ungeregelte Druckluftzufuhr an einen eingangsseitigen Anschluss des Relaisventils 29, dessen Ausgangsanschluss proportional zu einem anliegenden Druck an dem Steueranschluss 29a für die nachfolgenden Federspeicherbremszylinder 63, 64 Druckluft mit einem graduellen Luftdruck bereitstellt.

Die Ventile sind in der Ausführungsform wie folgt verschaltet:
Das erste Magnetventil 21 wird eingangsseitig von der Druckluft des Kompressors 51 bzw. der Druckluftzufuhr 50 mit Druckluft versorgt. Das erste Magnetventil 21 weist dabei zwei Schaltpositionen 21a, 21b auf, wobei eine erste Schaltposition 21a eine Entlüftung über eine Entlüftungsleitung 21c der dem ersten Ventil 21 nachfolgenden Komponenten ermöglicht, die erste Schaltposition 21a entspricht demnach einer Entlüftungsstellung. In der zweiten Schaltposition 21b ist das erste Magnetventil 21 auf Durchlass geschaltet, so dass die nachfolgenden Komponenten mit der Druckluft des Kompressors 51 belüftet werden können. Das erste Magnetventil 21 ist mit der Druckluftzufuhr 50 durch eine Druckluftleitung 31 verbunden. Das erste Magnetventil 21 wird durch ein Federelement 21d in die zweite Schaltposition 21b vorgespannt. Um das Magnetventil 21 in die erste Schaltposition 21a zu schalten, wird an einen elektrischen Steueranschluss 21e eine Spannung angelegt werden, so dass eine Magnetkraft die Kraft des Federelements 21d übersteigt und das Magnetventil 21 schaltet. An das erste Magnetventil 21 sind über eine Druckluftleitung 34 ein zweites Magnetventil 22 sowie über eine von der Druckluftleitung 34 abzweigende Druckluftleitung 39 ein erster Eingangsanschluss des ersten Select-High-Ventils 25 angeschlossen.

Das zweite Magnetventil 22 weist zwei Schaltpositionen 22a, 22b auf, wobei die erste Schaltposition 22a einer Sperrstellung und die zweite Schaltposition 22b einer Durchlassstellung entspricht. Das zweite Magnetventil 22 ist durch ein Federelement 22d vorgespannt und wird durch die Vorspannkraft in die zweite Schaltposition 22b geschaltet. Um das zweite Magnetventil 22 in die erste Schaltposition 22a zu schalten, wird an einen elektrischen Steueranschluss 22e eine Spannung angelegt, so dass eine Magnetkraft die Kraft des Federelements 22d übersteigt und das zweite Magnetventil 22 schaltet.

Das erste Select-High-Ventil 25 ist über eine Druckluftleitung 38 an einem zweiten Eingangsanschluss an das bistabile Ventil 24 angeschlossen, wobei der höhere der beiden Drücke des ersten Magnetventils 21 und des bistabilen Ventils 24 von dem Select-High-Ventil 25 über eine Leitung 40 an den Steuereingang 23e des pneumatisch steuerbaren Ventils 23 weitergeleitet wird.

Das pneumatisch steuerbare Ventil 23 ist mit der Druckluftzufuhr 50 über Druckluftleitungen 31, 32, 35 unmittelbar verbunden und weist zwei Schaltpositionen 23a, 23b auf, wobei die erste Schaltposition 23a eine Entlüftungsposition der nachfolgenden Komponenten über eine Entlüftungsleitung 23c ist, und die zweite Schaltposition 23 eine Durchlassposition zur Belüftung eines ersten Eingangsanschlusses des zweiten Select-High-Ventils 26 über eine Druckluftleitung 43 ist. Das pneumatisch steuerbare Ventil 23 ist durch ein Federelement 23d so vorgespannt, dass das pneumatisch steuerbare Ventil 23 bei einem an dem Steueranschluss 23e anliegenden Vorratsdruck in die Entlüftungsposition 23a fährt. Liegt kein Vorratsdruck an dem Steueranschluss 23e an, so fährt das pneumatisch steuerbare Ventil 23 in die Durchlassposition 23b.

Das bistabile Ventil 24 weist ebenfalls zwei Schaltpositionen 24a, 24b auf, wobei die erste Schaltposition 24a eine Durchlassposition ist, während die zweite Schaltposition 24b eine Entlüftungsposition ist, wobei über eine Entlüftungsleitung 24c die nachfolgenden Komponenten, nämlich das erste Select-High-Ventil 25 sowie ein Select-Low-Ventil 28, entlüftet werden.

Das mit dem zweiten Magnetventil 22 und dem bistabilen Ventil 24 über die Leitungen 41, 42 und 36 verbundene Select-Low-Ventil 28 steht mit nachfolgenden Komponenten in Verbindung, nämlich dem zweiten Select-High-Ventil 26 sowie dem dritten Select-High-Ventil 27. Der Ausgang des Select-Low-Ventils 28 führt den niedrigeren der beiden Eingangsdrücke.

Das zweite Select-High-Ventil 26 wird über die beiden Druckluftleitungen 43, 44 eingangsseitig mit Druckluft von dem pneumatisch steuerbaren Ventil 23 sowie dem Select-Low-Ventil 28 versorgt, wobei die den höheren Druck aufweisenden Druckluft an die zweite Ausgangsleitung 72 weitergeleitet wird. An die Ausgangsleitung 72 ist das zweite Anhängerbremsmodul 62 angeschlossen.

Das dritte Select-High-Ventil 27 wird über die Druckluftleitung 45 von dem Select-Low-Ventil 28 sowie einer pneumatischen Steuerleitung 90 jeweils eingangsseitig mit Druckluft versorgt, wobei die Druckluft mit dem hören der beiden Drücke über die Druckluftleitung 46 an den pneumatischen Steueranschluss 29a des Relaisventil 29 geleitet wird. Beispielsweise in der Druckluftleitung 46 ist ein Drucksensor 80 angeordnet, welcher den Druck in der Druckleitung 46 misst und den gemessenen Wert in einen Spannungswert umwandelt; dieser kann von einer Steuereinrichtungen (nicht gezeigt) ausgelesen werden.

Insbesondere sind die Druckluftausgänge voneinander unabhängig mit Druckluft versorgt. Der erste Druckluftausgang 71 wird unmittelbar durch das erste und zweite Magnetventil 21, 22 mit Druckluft versorgt. Der zweite Druckluftausgang 72 kann durch das Select-Low-Ventil 26 oder durch das pneumatisch ansteuerbare Ventil 23 unabhängig von dem ersten Druckluftausgang mit Druckluft versorgt werden. Der dritte Druckluftausgang 73 wird demgegenüber direkt von der Luftzufuhr mit Druckluft versorgt und nur über das Relaisventil gesteuert. Insbesondere können die drei Druckluftausgänge 71, 72, 73 einzeln mit unterschiedliche Drücke aufweisender Druckluft versorgt werden.

In Figur 1 ist die elektrische Parkbremse bezogen auf das Anhängersteuermodul 62 in einer Prüfkonfiguration gezeigt, wobei das erste Magnetventil 21 sowie das bistabile Ventil 24 jeweils in ihre Entlüftungsposition 21a, 24b geschaltet sind, so dass die den Vorratsdruck aufweisende Druckluft nicht weiter geleitet wird, während das von diesen beiden Ventilen 21, 24 angesteuerte pneumatische Steuerventil 23 aufgrund des lediglich anliegenden Umgebungsdrucks an dem Steueranschluss 23e von dem Federelement 23d in die Durchlassposition 23b geschaltet ist. Das zweite Magnetventil 22 ist dabei in der zweiten Schaltposition 22b auf Durchlass geschaltet, so dass an dem ersten Anhängerbremsmodul 61 sowie an dem Select-Low-Ventil 28 jeweils nur Umgebungsdruck anliegt. An dem anderen Eingangsanschluss wird das Select-Low-Ventil 28 von dem bistabilen Ventil 24 nur mit Umgebungsdruck versorgt, so dass das Select-Low-Ventil 28 an das zweite und das dritte Select-High-Ventil 26, 27 jeweils nur Umgebungsdruck weiterleitet. Dadurch liegt an dem zweiten Select-High-Ventil 26, welches ebenfalls von dem pneumatisch steuerbaren Ventil 23 mit Druckluft versorgt wird, eine Druckluft mit dem Vorratsdruck des Kompressors an, wobei der Vorratsdruck als der höhere der beiden anliegenden Drücke an das zweite Anhängerbremsmodul 62 weitergeleitet wird. Es findet durch das pneumatisch steuerbare Ventil 23 eine Invertierung des Vorratsdruckes statt, wobei die Invertierung dadurch erfolgt, dass wenn von dem ersten Magnetventil 21 und/oder dem bistabilen Ventil 24 Vorratsdruck weitergeleitet wird, durch das pneumatisch steuerbare Ventil 23 Umgebungsdruck den nachfolgenden Komponenten zur Verfügung gestellt wird. Wird durch keines der beiden Ventile umfassend das erste Magnetventil 21 und das bistabile Ventil 24 der Vorratsdruck weitergeleitet, so leitet das pneumatische steuerbare Ventil 23 den Vorratsdruck weiter. In der Prüfkonfiguration liegt an der pneumatischen Steuerleitung 90 ebenfalls nur Umgebungsdruck an, so dass an das Relaisventil 29 durch das dritte Select-High-Ventil 27 ebenfalls nur Umgebungsdruck weitergeleitet wird. Damit ist das Relaisventil 29 in eine Sperr- bzw. Entlüftungsposition geschaltet und entlüftet den dritten Druckluftausgang 73. Daraus folgt, dass auch die Federspeicherbremszylinder 63, 64 entlüftet sind, so dass die Feder der Federbremszylinder ein Bremskraft erzeugt und das Nutzfahrzeug festgelegt ist. Demgemäß ist nur die Parkbremse des Nutzfahrzeuges, nicht aber die Bremse des Anhängers aktiv, so dass der Trailertest an einem Hang durchgeführt werden kann.

Insbesondere muss hierzu nur das erste Magnetventil 21 entgegen der Vorspannkraft des Federelements 21d durch eine Bestromung des elektrischen Steueranschlusses 21e verfahren werden.

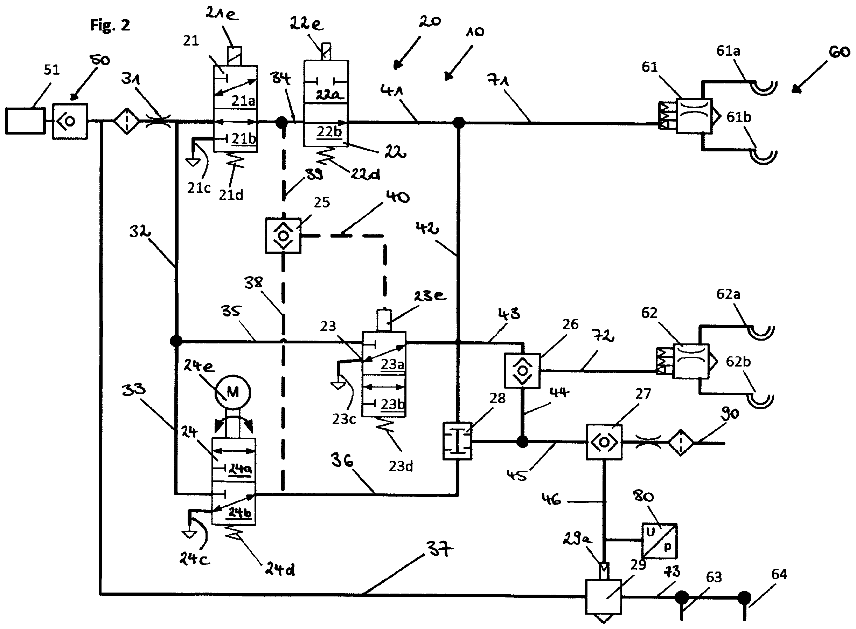

Figur 2 zeigt die Ausführungsform der erfindungsgemäßen Parkbremse 10 in einer Parkkonfiguration, wobei gegenüber der Prüfkonfiguration das erste Magnetventil 21 nicht mit Strom versorgt wird, so dass das erste Magnetventil 21 durch die Vorspannkraft des Federelements 21d in die Durchlassposition 21b geschaltet ist. Dadurch wird das über das Select-High-Ventil 25 angesteuerte pneumatisch steuerbare Ventil 23 mit dem Vorratsdruck des Kompressors beaufschlagt, so dass das pneumatisch steuerbare Ventil 23 entgegen der Vorspannkraft des Federelements 23 in die Entlüftungsposition verfahren ist. Hieraus folgt, dass das zweite Select-High-Ventil 26 den Umgebungsdruck an den zweiten Ausgangsanschluss 72 und an das an diesen Ausgangsanschluss 72 angeschlossene Anhängerbremsmodul 62 weiterleitet. Durch die invertierende Wirkung des Anhängerbremsmoduls 62 steht der Kupplungskopf 62b unter Druck. Der Anhänger wird gebremst. Die elektrische Parkbremse befindet sich in der in Figur 2 gezeigten Position in einer stabilen Position, da keine der Komponenten bestromt werden muss. Es wird also vorteilhaft auch ein Ausfall der Elektrizität nicht zu einem Versagen der Bremse führen.

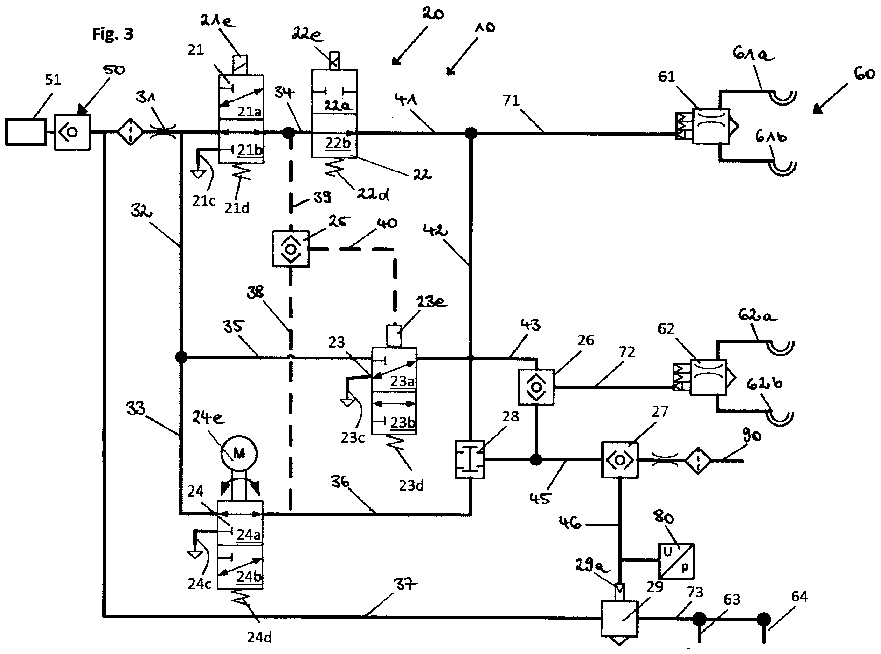

In Figur 3 ist eine Fahrkonfiguration der Parkbremse gezeigt, wobei hierbei gegenüber der Parkkonfiguration das bistabile Ventil 24 durch den Motorantrieb 24e in die Durchlassposition 24a gefahren ist. Damit ist die ausgangsseitige Druckluftleitung 36, 38 zu dem Select-Low-Ventil 28 und zu dem ersten Select-High-Ventil 26 mit Vorratsdruck beaufschlagt, was eine Änderung des Druckausgangssignals des Select-Low-Ventils 28 hin zu einem hohen Druck zur Folge hat. Dadurch liegt an dem zweiten und dem dritten Select-High-Ventil jeweils Druckluft mit Vorratsdruck an, so dass dieser Vorratsdruck an das zweite Anhängerbremsmodul 72 sowie das Relaisventil 29 weitergegeben wird. Hierdurch wird die Bremswirkung des Anhängers aufgehoben sowie eine Öffnung des Relaisventil 29 veranlasst, so dass die Federspeicherbremszylinder 63, 64 an dem dritten Druckluftausgang 73 mit Druckluft versorgt werden und entgegen der Federkraft lösen. Da das bistabile Ventil 24 in beiden Positionen stabil ist und auch die Magnetventile 21, 22 unbestromt sind, ergibt sich wiederum eine stabile Position der Parkbremse, so dass selbst bei einem Ausfall der Elektrizität diese Position nicht verlassen wird, es mitunter also nicht zu einer plötzlich eintretenden Bremswirkung kommt.

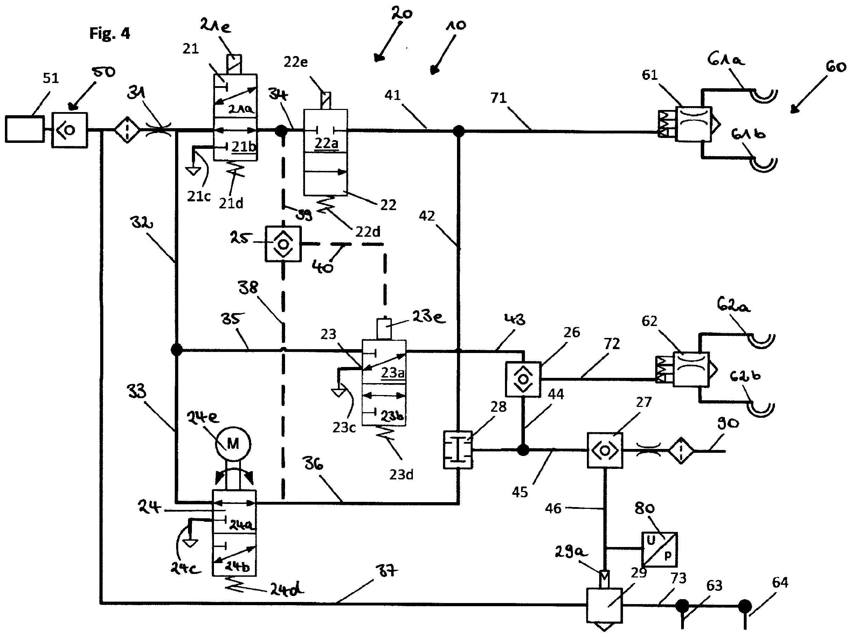

In den Figuren 4-6 werden Funktionen zur graduellen Belüftung bzw. Entlüftung der Parkbremse beschrieben. Diese Funktionen werden während der Fahrt verwendet, um eine Bremswirkung der Anhängerbremse zu steuern und eine Bremswirkung der Federspeicherbremszylinder 63, 64 als Hilfsbremse für eine Betriebsbremse einzusetzen. An der Steuerung der graduellen Be- und Entlüftung der Druckluftausgänge sind insbesondere die beiden Magnetventile 21, 22 beteiligt, da das bistabile Ventil in eine Durchlassposition geschaltet ist, so dass das pneumatisch steuerbare Ventil 23 stets mit Vorratsdruck angesteuert ist und damit entlüftet. Das Drucksignal des bistabilen Ventils 24 wird ebenfalls aufgrund des Select-Low-Ventils 28 nicht weitergereicht, so dass das Ventilpaar aus den beiden elektrisch steuerbaren Magnetventilen 21, 22 maßgeblichen Einfluss auf das Druckniveau an den Druckluftausgängen 71, 72, 73 hat.

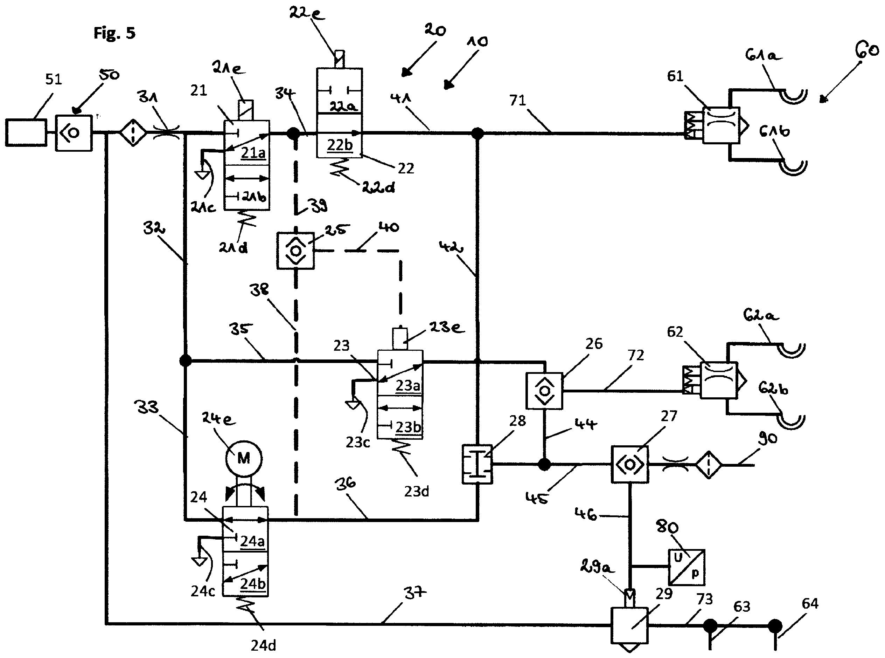

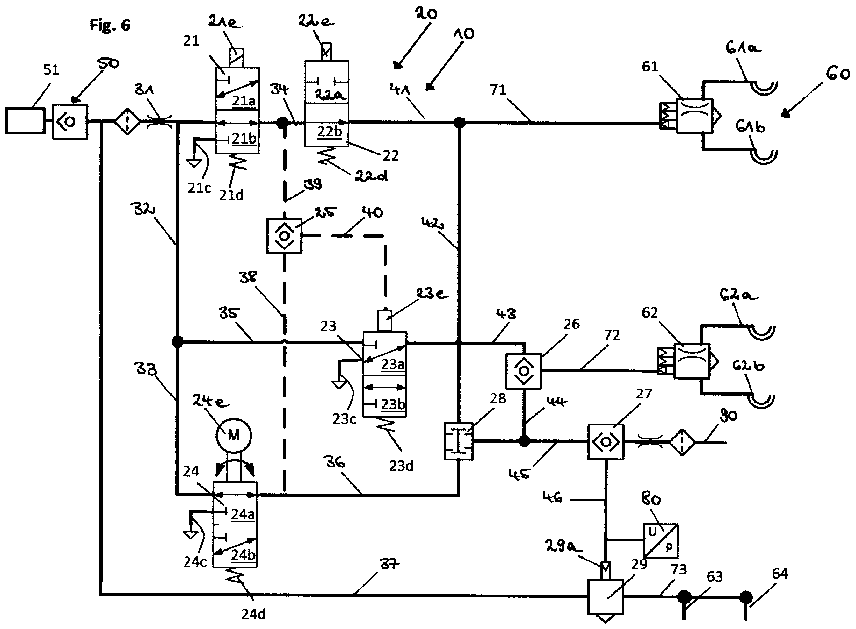

In Figur 4 ist das zweite Magnetventil 22 über den Steueranschluss 22e bestromt, wobei das zweite Magnetventil 22 dadurch in eine Sperrposition 22a entgegen einer Vorspannung des Federelements 22d verschoben ist, so dass eine Druckluft in den Leitungen 41, 42, 44, 45, 46 aufgrund der Anordnung des Select-Low-Ventils 28 hinter dem zweiten Magnetventil 22 und der Anordnung des dritten Select-High-Ventil 27 hinter dem Select-Low-Ventils 28 auf einem Druckniveau gehalten wird. Um nicht zu entlüften, muss das erste Magnetventil 21 und/oder das bistabile Ventil 24 in eine Durchlassposition verfahren sein. Die Be- bzw. Entlüftung der genannten Leitungen ist anhand der Figuren 5 und 6 beschrieben.

Figur 5 zeigt eine Entlüftungskonfiguration bei der die Bremswirkung steigt. Die Entlüftung erfolgt dabei graduell. Hierzu werden die das erste Magnetventil 21 und das zweite Magnetventil 22 gegenüber der Haltekonfiguration gemäß Figur 4 in die jeweils andere Schaltposition durch entsprechende Bestromung geschaltet, so dass das erste Magnetventil 21 in der Entlüftungsposition 21a und das zweite Magnetventil 22 in einer Durchlassposition 22b geschaltet ist. Hierdurch werden über die Entlüftungsleitung 21c alle nachfolgenden Druckluftleitungen und Komponenten durch das erste Magnetventil 21 entlüftet. Dies betrifft das zweite Magnetventil 22, das Select-Low-Ventil 28, das zweite und dritte Select-High-Ventil 26, 27 sowie das Relaisventil 29. Dadurch sind auch die drei Druckluftausgänge 71, 72, 73 entlüftet. Eine Entlüftung erfolgt nicht sofort, sondern graduell, so dass durch ein Umschalten des ersten und zweiten Magnetventil 21, 22 in die Haltekonfiguration gemäß Figur 4 ein bestimmtes Druckniveau in den vorgenannten Leistungen und Komponenten gehalten werden kann. Durch die invertierende Wirkung des Anhängersteuermoduls nimmt die Bremswirkung im Anhänger wegen der zunehmenden Entlüftung des Eingangsanschlusses zu.

Ein Vergleich zwischen den Konfigurationen von Figur 1 und 5 verdeutlicht die Funktion des bistabilen Ventils 24. Die beiden Magnetventile 21 und 22 sind dabei in beiden Konfigurationen gleich geschaltet. Während in der Prüfkonfiguration gemäß Figur 1 das bistabile Ventil 24 in die Entlüftungsposition gefahren ist, und daher das pneumatisch steuerbare Ventil 23 den Vorratsdruck weiterleitet, welcher dann über das zweite Select-High-Ventil 26 an das zweite Anhängersteuermodul 62 weitergereicht wird, so dass dort eine maximale Bremswirkung auftritt, ist demgegenüber das bistabile Ventil 24 in der Entlüftungskonfiguration gemäß Figur 5 auf Durchlass geschaltet, wodurch das pneumatisch steuerbare Ventil 23 stets mit einem Vorratsdruck angesteuert ist. Hierdurch wird der geringere der beiden an dem Select-Low-Ventil 28 anliegenden Drücke, welches der durch die Entlüftung der Magnetventile 21, 22 bedingte fallende Druck ist, an das Anhängersteuermodul 62 weitergeleitet wird. Da an dem bistabilen Ventil 24 direkt Vorratsdruck ansteht, kann nicht die Situation auftreten, dass der von dem bistabilen Ventil 24 an das erste Select-High-Ventil 25 weitergegebene Druck zusammenbricht, was ein Umschalten des pneumatisch steuerbaren Ventils 23 zur Folge hätte. Hierdurch würde das zweite Select-High-Ventil 26 mit Vorratsdruck beaufschlagt und folglich auch der invertierende Eingang des Anhängersteuermoduls 62. Dies hätte zur Konsequenz, dass die Bremswirkung des Anhängers aufgehoben würde, was während einer Bremsung unbedingt zu vermeiden ist.

Figur 6 zeigt eine Belüftungskonfiguration, bei der die Bremswirkung abnimmt. Um den an den Druckluftausgängen 71, 72, 73 anliegenden Druck zu erhöhen, muss das erste Magnetventil 21 in die Durchlassposition 21b geschaltet werden. Gleichzeitig muss auch das zweite Magnetventil 22 in die Durchlassposition 22b geschaltet sein. Hierdurch wird Druckluft mit Vorratsdruck von der Druckluftzufuhr 50 an die Ausgangsleitungen 71, 72, 73 weitergegeben, wobei das Druckniveau an dem dritten Ausgang 73 über das Relaisventil 29 und das daran anliegende Druckniveau gesteuert wird, die eigentliche Druckluft eingangsseitig des Relaisventils 29 aber unmittelbar von der Druckluftzufuhr 50 bereitgestellt wird, so dass an der Ausgangsleitung 73 ein anderes Druckniveau herrschen kann als an dem ersten Druckluftausgang 71 und dem zweiten Druckausgang 72. Soll das Druckniveau an den Druckluftausgängen 71, 72 73 gehalten werden, so muss lediglich das zweite Magnetventil 22 aus der Durchlassposition 22b in die Sperrstellung 22a geschaltet werden.

Es versteht sich, dass ein Drucksensor an jeder der Druckluftleitungen 31-46 sowie am Arbeitsausgang des Relaisventils 29 bzw. am dritten Druckluftausgang oder in der dritten Ausgangsleitung 73 zur Druckmessung angeordnet sein kann.

### Bezugszeichenliste

- 10: elektrische Parkbremse
- 20: Ventilanordnung
- 21: erstes Magnetventil, 3/2-Wegeventil
- 21a: erste Schaltposition, Sperrstellung und Entlüftung
- 21b: zweite Schaltposition, Durchlass
- 21c: Entlüftungsleitung
- 21d: Federelement
- 21e: elektrischer Steueranschluss
- 22: zweites Magnetventil, 2/2-Wegeventil
- 22a: erste Schaltposition, Sperrstellung
- 22b: zweite Schaltposition, Durchlass
- 22d: Federelement
- 22e: elektrischer Steueranschluss
- 23: pneumatisch steuerbares Ventil, 3/2-Wegeventil
- 23a: erste Schaltposition, Sperrstellung und Entlüftung
- 23b: zweite Schaltposition, Durchlass
- 23c: Entlüftungsleitung
- 23d: Federelement
- 23e: pneumatischer Steueranschluss
- 24: bistabiles Ventil, 3/2-Wegeventil
- 24a: erste Schaltposition, Durchlass
- 24b: zweite Schaltposition, Sperrstellung und Entlüftung
- 24c: Entlüftungsleitung
- 24d: Federelement
- 24e: Motorantrieb
- 25: erstes Select-High-Ventil
- 26: zweites Select-High-Ventil
- 27: drittes Select-High-Ventil
- 28: Select-Low-Ventil
- 29: Relaisventil
- 29a: pneumatischer Steueranschluss
- 31-46: Druckluftleitung
- 50: Druckluftzufuhr
- 51: Kompressor
- 60: Druckluftverbraucherkreise
- 61: erstes Anhängerbremsmodul
- 61a: Kupplungskopf Vorratsspeicher des ersten Anhängermoduls
- 61b: Kupplungskopf Anhängerbremse
- 62: zweites Anhängerbremsmodul
- 62a: Kupplungskopf Anhängervorratsspeicher
- 62b: Kupplungskopf Anhängerbremse
- 63: erster Federspeicherbremszylinder
- 64: zweiter Federspeicherbremszylinder
- 71: erster Druckluftausgang
- 72: zweiter Druckluftausgang
- 73: dritter Druckluftausgang
- 80: Drucksensor
- 90: pneumatische Steuerleitung

## Patentansprüche

1. Elektrische Parkbremse (10), insbesondere für ein Nutzfahrzeug, umfassend
- wenigstens zwei Druckluftausgänge (72, 73),
- eine elektrisch steuerbare Ventilanordnung (20) zur Steuerung einer Druckluftverteilung an die Druckluftausgänge (72, 73) umfassend ein bistabiles Ventil (24),
- einen Drucklufteingang, der mit einer Druckluftzufuhr (50) zur Versorgung der Ventilanordnung (20) und der Druckluftausgänge (72, 73) mit Druckluft von einem Druckluftvorrat verbindbar ist, wobei
- einer der zumindest zwei Druckluftausgänge einen Feststellbremsanschluss (63, 64) mit Druckluft versorgt, wobei diesem Druckluftausgang ein Relaisventil (29) vorgeschaltet ist, und wobei
- das bistabile Ventil (24) eingangsseitig unabhängig von dem Schaltzustand der Ventilanordnung von der Druckluftzufuhr (50) mit Druckluft versorgt ist, die einen von dem Druckluftvorrat zur Verfügung gestellten Druck aufweist, **dadurch gekennzeichnet, dass**
- zumindest ein Drucksensor (80) zur Druckmessung der Druckluft innerhalb der Ventilanordnung (20) angeordnet ist, wobei der Drucksensor (80) vor einem Steuereingang des Relaisventils (29) angeordnet ist.

2. Elektrische Parkbremse (10) nach Anspruch 1, **dadurch gekennzeichnet, dass** das bistabile Ventil (24) unmittelbar mit der Druckluftzufuhr (50) verbunden ist.

3. Elektrische Parkbremse (10) nach einem der vorhergehenden Ansprüche, **dadurch gekennzeichnet, dass** die Ventilanordnung (20) genau drei elektrisch steuerbare Ventile (21, 22, 24) umfasst.

4. Elektrische Parkbremse (10) nach Anspruch 3, **dadurch gekennzeichnet, dass** die Ventilanordnung ein pneumatisch steuerbares Ventil (23) zur Invertierung eines Vorratsdruckes für ein Anhängersteuermodul umfasst.

5. Elektrische Parkbremse (10) nach einem der vorhergehenden Ansprüche, **dadurch gekennzeichnet, dass** die Ventilanordnung ein elektrisch steuerbares Ventilpaar, das eine graduelle Druckluftversorgung der zumindest zwei Druckluftausgänge bereitstellt, aufweist.

6. Elektrische Parkbremse (10) nach einem der vorhergehenden Ansprüche, **dadurch gekennzeichnet, dass** zumindest ein Drucksensor zur Druckmessung der Druckluft zwischen der Ventilanordnung und einem der Druckluftausgänge angeordnet ist.

7. Elektrische Parkbremse (10) nach einem der vorhergehenden Ansprüche, **dadurch gekennzeichnet, dass** zumindest ein weiterer Sensor für einen anderen Messwert als den Druck innerhalb der Ventilanordnung oder zwischen den Ventilanordnung (20) und einem der Druckluftausgänge angeordnet ist.

8. Elektrische Parkbremse (10) nach einem der vorhergehenden Ansprüche, **dadurch gekennzeichnet, dass** das bistabile Ventil (24) einen selbsthemmenden Motorantrieb (24e) aufweist.

9. Elektrische Parkbremse (10) nach einem der Ansprüche 1 bis 7, **dadurch gekennzeichnet, dass** das bistabile Ventil (24) pneumatisch ansteuerbar ist.

## Claims

1. Electric parking brake (10), in particular for a utility vehicle, comprising:
- at least two compressed air outlets (72, 73),
- an electrically controllable valve arrangement (20) for controlling a compressed air distribution to the compressed air outlets (72, 73), the said arrangement comprising a bistable valve (24),
- a compressed air inlet which can be connected to a compressed air supply (50) in order to supply the valve arrangement (20) and the compressed air outlets (72, 73) with compressed air from a compressed air reservoir, wherein
- one of the at least two compressed air outlets supplies a holding brake connection (63, 64) with compressed air, and this compressed air outlet is connected upstream from a relay valve (29), and wherein
- on its input side the bistable valve (24) is supplied with compressed air from the compressed air supply (50) regardless of the switching condition of the valve arrangement, which supply is at a pressure delivered by the compressed air reservoir, **characterised in that**
- at least one pressure sensor (80) is arranged so as to measure the pressure of the compressed air inside the valve arrangement (20), and the pressure sensor (80) is positioned ahead of a control inlet of the relay valve (29).

2. Electric parking brake (10) according to Claim 1, **characterised in that** the bistable valve (24) is connected directly to the compressed air supply (50).

3. Electric parking brake (10) according to either of the preceding claims, **characterised in that** the valve arrangement (20) comprises exactly three electrically controllable valves (21, 22, 24).

4. Electric parking brake (10) according to Claim 3, **characterised in that** the valve arrangement comprises a pneumatically controllable valve (23) for inverting a reservoir pressure for a trailer control module.

5. Electric parking brake (10) according to any of the preceding claims, **characterised in that** the valve arrangement comprises an electrically controllable valve pair which enables a gradual compressed air supply to be delivered to the at least two compressed air outlets.

6. Electric parking brake (10) according to any of the preceding claims, **characterised in that** at least one pressure sensor is provided between the valve arrangement and one of the compressed air outlets for measuring the pressure of the compressed air.

7. Electric parking brake (10) according to any of the preceding claims, **characterised in that** at least one further sensor is provided within the valve arrangement or between the valve arrangement (20) and one of the compressed air outlets, for a measured value other than the pressure.

8. Electric parking brake (10) according to any of the preceding claims, **characterised in that** the bistable valve (24) comprises a self-locking motor drive (24e).

9. Electric parking brake (10) according to any of Claims 1 to 7, **characterised in that** the bistable valve (24) can be controlled pneumatically.

## Revendications

1. Frein (10) électrique de stationnement, notamment d'un véhicule utilitaire, comprenant
- au moins deux sorties (72, 73) d'air comprimé,
- un dispositif (20) de soupape pouvant être commandé électriquement pour la commande d'une répartition de l'air comprimé sur les sorties (72, 73) d'air comprimé comprenant une soupape (24) bistable,
- une entrée d'air comprimé, qui peut être reliée à un apport (50) d'air comprimé pour l'alimentation en air comprimé par un réservoir d'air comprimé du dispositif (20) de soupape et des sorties (72, 73) d'air comprimé, dans lequel
- l'une des au moins deux sorties d'air comprimé alimente en air comprimé un raccord (63, 64) de frein de stationnement, une vanne (29) relais étant montée en amont de cette sortie d'air comprimé, et dans lequel
- la soupape (24) bistable est alimentée, du côté de l'entrée indépendamment de l'état de commutation du dispositif de soupape, par l'apport (50) d'air comprimé en air comprimé, qui a une pression mise à disposition par le réservoir d'air comprimé,
**caractérisé en ce que**
- au moins un capteur (80) de pression de mesure de la pression de l'air comprimé est monté à l'intérieur du dispositif (20) de soupape, le capteur (80) de pression étant monté en amont d'une entrée de commande de la vanne (29) relais.

2. Frein (10) électrique de stationnement suivant la revendication 1, **caractérisé en ce que** la soupape (24) bistable est reliée directement à l'apport (50) d'air comprimé.

3. Frein (10) électrique de stationnement suivant l'une des revendications précédentes, **caractérisé en ce que** le dispositif (20) de soupape comprend exactement trois soupapes (21, 22, 24) pouvant être commandées électriquement.

4. Frein (10) électrique de stationnement suivant la revendication 3, **caractérisé en ce que** le système de soupape comprend une soupape (23) pouvant être commandée pneumatiquement pour l'inversion d'une pression de réservoir pour un module de commande de remorque.

5. Frein (10) électrique de stationnement suivant l'une des revendications précédentes, **caractérisé en ce que** le dispositif de soupape a une paire de soupapes pouvant être commandée électriquement, qui met à disposition une alimentation graduelle en air comprimé des aux moins deux sorties d'air comprimé.

6. Frein (10) électrique de stationnement suivant l'une des revendications précédentes, **caractérisé en ce qu'**au moins un capteur de pression de mesure de la pression de l'air comprimé est monté entre le dispositif de soupape et l'une des sorties d'air comprimé.

7. Frein (10) électrique de stationnement suivant l'une des revendications précédentes, **caractérisé en ce qu'**un autre capteur pour une autre valeur de mesure que la pression est monté à l'intérieur du dispositif de soupape ou entre le dispositif (20) de soupape et l'une des sorties d'air comprimé.

8. Frein (10) électrique de stationnement suivant l'une des revendications précédentes, **caractérisé en ce que** la soupape (24) bistable a un entraînement (24e) par moteur à blocage automatique.

9. Frein (10) électrique de stationnement suivant l'une des revendications 1 à 7, **caractérisé en ce que** la soupape (24) bistable peut être commandée pneumatiquement.
